# EUROPEAN PATENT SPECIFICATION

(11) **EP 0 779 248 B1**
(45) Date of publication and mention of the grant of the patent: **22.08.2001**
(21) Application number: 96119888.4
(22) Date of filing: 11.12.1996
(51) Int. Cl.: C03B 7/16, C03B 9/41

(54) **Glass gob distributor**
Glaspostenverteiler
Distributeur de gouttes de verre

(30) Priority: 12.12.1995 IT TO950997
(43) Date of publication of application: 18.06.1997
(73) Proprietor: BOTTERO S.p.A., 12010 Cuneo (IT)
(72) Inventor: Simondi, Carlo, 12100 Cuneo (IT); Tealdi, Alessandro, 12089 Villanova Mondovi' (IT); Viada, Bruno, 12010 Madonna Delle Grazie (IT); Giraudo, Vittore, 12100 Cuneo (IT)
(74) Representative: Jorio, Paolo, Dr. Ing.

(56) References cited:
- EP-A- 0 142 746
- EP-A- 0 432 833
- US-A- 4 723 977

## Description

The present invention relates to a glass gob distributor.

Glassware, in particular hollow glassware, is normally produced using systems comprising a number of forming molds, and a feed unit for feeding the molds with a succession of molten glass gobs.

The feed unit comprises a gob forming device, and a gob distributor located between the forming device and the molds to distribute the gobs into the molds in a predetermined order.

Known gob distributors normally comprise one or more gob distribution or guide channels, which have respective gob inlet portions connected to a fixed supporting structure and rotating about respective hinge axes, and which are movable by an actuating assembly into a number of angular feed positions, in each of which the outlet portion of each channel communicates with the inlet of a respective mold.

The actuating assembly normally comprises an electric motor with a rotary shaft; a first rotary-to-linear motion converter having an input connected to the output shaft of the motor; and a second linear-to-rotary motion converter interposed between the first converter and the distribution channels. For reasons of space and to simplify assembly, the actuating assembly normally also comprises a belt transmission interposed between the output shaft of the motor and the first converter. A gob distributor of the above type is disclosed in EP-A-0 432 833.

Though widely used, known gob distributors all fail to provide for accurately displacing and positioning the distribution channels, mainly on account of the design of the channel actuating assemblies, which comprise a relatively complex transmission system between the electric motor and the gob distribution channels. This, in fact, comprises no fewer than two series-connected motion converters, and possibly also a belt transmission, and therefore involves a relatively considerable amount of slack, which, in use, inevitably results in a gradually increasing discrepancy between the theoretical and actual feed positions of the distribution channels.

At present, the discrepancy is reduced using complex, high-cost electric circuits for controlling the electric motor, and expensive, frequently bulky, slack takeup devices, and becomes increasingly difficult to control as the working life of the distributors increases, on account of inevitable wear of the component parts involved.

What is more, the design of the transmission system also contributes towards increasing the size and weight of known distributors, and therefore further complicating assembly and/or maintenance, which are already awkward on account of the overhead location and environmental conditions in which the distributors are operated.

Finally, the design of the transmission system also results in relatively high manufacturing cost, both on account of the large number of transmission members employed, and the circuits and takeup devices required to achieve and maintain an acceptable degree of accuracy as regards distribution.

It is an object of the present invention to provide a straightforward, low-cost gob distributor designed to overcome the aforementioned drawbacks.

According to the present invention, there is provided a glass gob distributor as specified in claim 1.

A non-limiting embodiment of the present invention will be described by way of example with reference to the accompanying drawings, in which:
Figure 1 shows a side view of a preferred embodiment of the gob distributor according to the present invention;
Figure 2 shows a view in the direction of arrow A in Figure 1;
Figure 3 shows a section of a detail in Figures 1 and 2 in other than the_ Figure 1 and 2 operating position;
Figure 4 shows a larger-scale section along line IV-IV in Figure 3;
Figure 5 shows a block diagram of a unit for controlling a motor of the Figure 1 distributor.

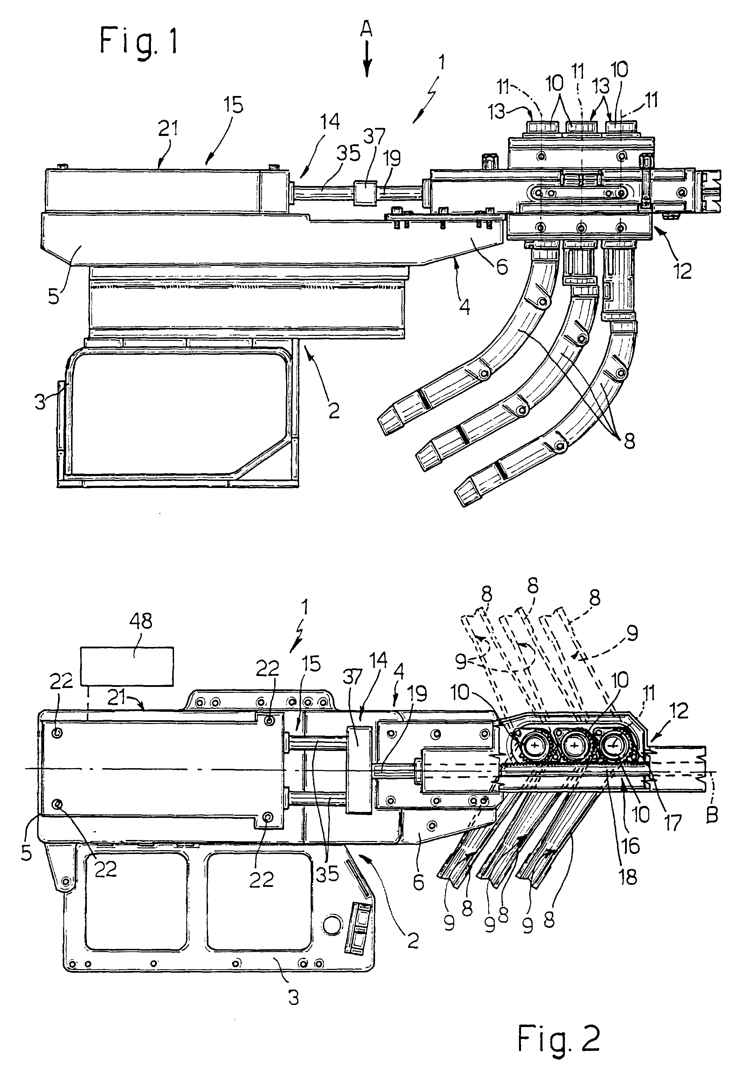

Number 1 in Figures 1 and 2 indicates a glass gob distributor for receiving a continuous succession of glass gobs (not shown) and distributing the gobs into a number of known forming molds (not shown) according to a predetermined distribution sequence.

Distributor 1 comprises a fixed frame 2, in turn comprising a lower box-shaped connecting body 3 and a substantially horizontal upper platform 4; and platform 4 comprises a first flat portion 5 over and connected integrally to body 3, and a second portion 6 projecting beyond body 3 from portion 5.

As shown in Figures 1 and 2, distributor 1 also comprises a number of elongated gob distributing and guide bodies 8, which, in the example shown, are three in number and each define a respective gob feed and guide channel 9 (Figure 2). Bodies 8 comprise respective tubular portions 10, which are adjacent to one another, are connected in axially-fixed manner to portion 6 of platform 4 by a known connecting device 12 so as to rotate about respective parallel axes 11, and define the inlets 13 (Figure 1) of respective guide channels 9.

Bodies 8 are rotated about respective axes 11 in opposite directions by an actuating assembly 14, which comprises a linear actuator 15, and a known, preferably rack-and-pinion type, linear-rotary motion converting device 16. More specifically, device 16 comprises a number of circular sector gears or pinions 17, each fitted to a respective tubular portion 10; and a rack 18, which meshes with all of pinions 17, and is connected in angularly-fixed manner to portion 6 so as to slide axially in direction B.

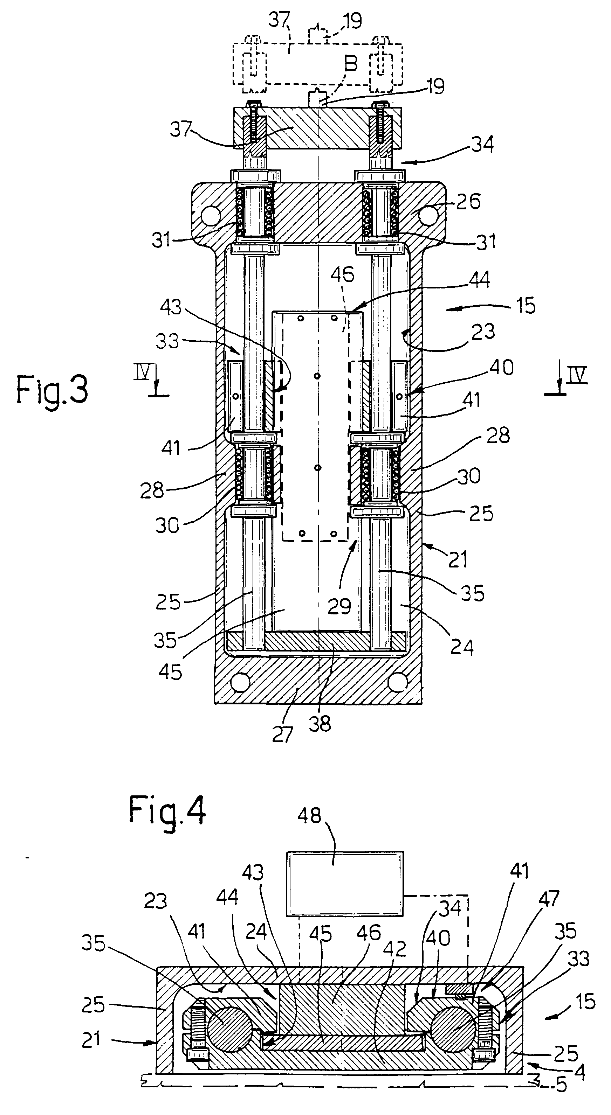

Rack 18 comprises an end portion 19 facing and connected integrally to linear actuator 15, which, in the example shown, extends over platform 4 and comprises an elongated shell or casing 21 connected integrally to portion 5 of platform 4 by means of a number of screws 22, and defining, with portion 5, an airtight chamber 23 (Figure 4).

As shown particularly in Figures 3 and 4, casing 21 comprises a rectangular central or upper wall 24; two rectangular lateral walls 25 parallel to direction B; two end walls 26, 27 extending perpendicularly to lateral walls 25; and two facing inner projections 28 extending towards each other from respective intermediate portions of respective lateral walls 25, and forming part of a straight guide 29 (Figure 3). Guide 29 also comprises two first known rolling bearings 30 housed inside respective seats formed in projections 28; and two second known airtight rolling bearings 31 housed inside respective seats formed in wall 26 and coaxial with the corresponding seats formed in projections 28.

Guide 29 forms part of a guide-slide assembly 33 also comprising a slide 34, which is connected in axially-sliding manner to guide 29, travels along a straight path coincident with direction B, and is connected integrally to the end portion of rack 18. In the Figure 3 and 4 embodiment, slide 34 comprises two parallel, preferably circular-section rods 35, each of which engages in sliding manner a respective pair of bearings 30 and 31, and projects outwards of casing 21 beyond respective bearing 31. The ends of rods 35 projecting outwards of casing 21 are connected integrally to rack 18 by a crosspiece 37 to which both rods 35 and portion 19 of rack 18 are preferably connected integrally by means of respective screws. The ends of rods 35 housed inside chamber 23, on the other hand, are connected to each other by a further crosspiece 38 (Figure 3) also housed inside chamber 23 and facing wall 27.

As shown in Figures 3 and 4, rods 35 are also connected integral with each other by an intermediate crosspiece 40 extending inside chamber 23, between projections 28 and wall 26, and comprising two lateral sleeve portions 41 inside which respective intermediate portions of rods 35 are locked. Crosspiece 40 also comprises a central plate portion 42, which, together with lateral portions 41, defines a cavity or seat 43 for partially housing a known linear electric servomotor 44 forming part of linear actuator 15.

In the example described, motor 44 is a brushless type, e.g. of the type produced and marketed by ANORAD, U.S.A., and, as shown in Figure 4, comprises a translating member 45 extending partly inside seat 43 and connected integrally to crosspiece 40, and a fixed member 46. Fixed member 46 extends parallel to direction B and between rods 35 and projections 28, is positioned facing member 45, and is connected integrally to the inner surface of wall 24 of casing 21 by means of a number of screws; and the position of member 45 in relation to fixed member 46 of motor 44 is detected by a known linear position transducer 47 (shown schematically) which may, for example, be a linear resolver, an optical line, a magnetostrictive linear transducer or a linear potentiometer, etc..

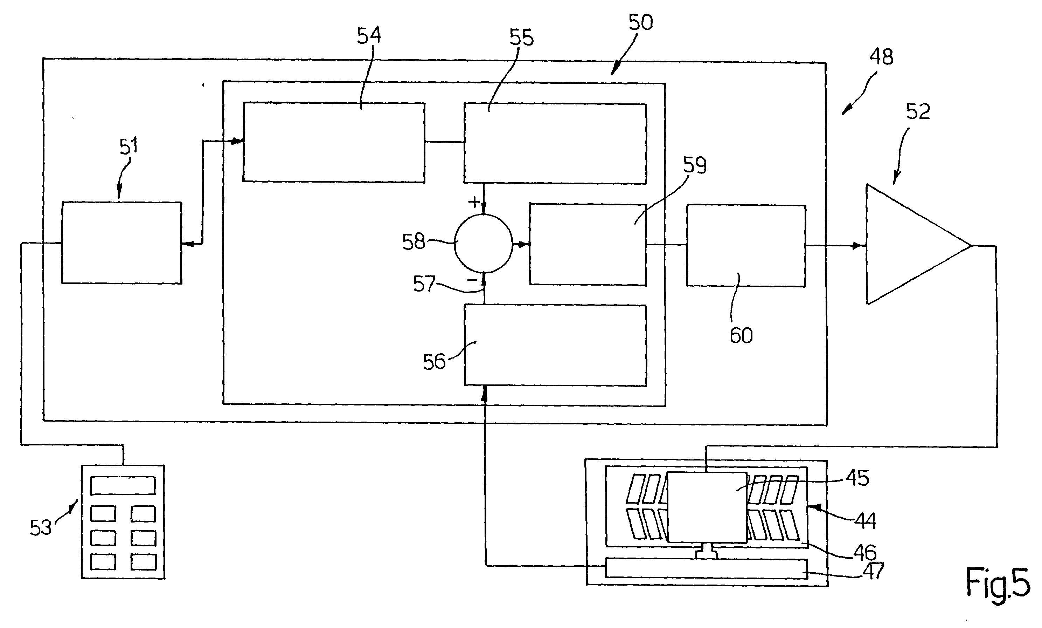

As shown in Figure 4, motor 44 and transducer 47 are connected to a known feedback type electronic control unit 48, which, as shown in Figure 5, in addition to position transducer 47 which generates an incremental or absolute output signal relative to the actual position of motor 44, also comprises a controller 50 connected to an external computer 51, and a drive stage 52 controlled by controller 50 and for driving linear motor 44. External computer 51 is connected to a data input unit, preferably a dedicated keyboard 53, for entering the desired initial and final position of each displacement of guide bodies 8. Controller 50 comprises an interface 54 connected to external computer 51; a motion profile generator 55 connected to interface 54; a real-position processor 56 connected to position transducer 47 and generating a real-position digital signal 57 according to the signal supplied by position transducer 47; an adding node 58 connected to motion profile generator 55 and to real-position processor 56; a PID filter 59 connected downstream from adding node 58; and a digital/analog converter 60, the output of which is connected to drive stage 52.

Electronic unit 48 provides for calculating the partial displacements to be made by motor 44 at each computing cycle - scanned by an external clock (not shown) - to reach the final position of the total displacement of motor 44. More specifically, at each computing cycle, and according to the desired initial and final position data entered by the operator on data input unit 53, motion profile generator 55 generates the value of the next desired position of motor 44; adding node 58 calculates the difference between said next position value and the present actual position of motor 44 supplied by real-position processor 56, to determine the desired partial displacement; said difference, i.e. the desired partial displacement, is filtered by PID filter 59, which generates a digital control voltage, which, converted into analog form by converter 60, is supplied to drive stage 52, which generates the corresponding supply voltage of motor 44.

In actual use, linear motor 44, controlled by unit 48, moves slide 34 along guide 29 and, therefore, rack 18 directly along path B so as to rotate bodies 8 about respective axes 11 and in relation to platform 6.

By virtue of featuring a linear motor 44, gob distributor 1 as described therefore provides for the following advantages.

As compared with known solutions, the transmission system connecting motor 44 to gob guide bodies 8 is much simpler in design and more reliable from the operating standpoint. That is, as compared with known solutions, the transmission system comprises only a small number of transmission members, thus providing for considerably less slack and inertia, rapid response, and a high degree of precision in the displacement and positioning of the channels.

The design of the transmission system therefore provides for reducing the size and weight and hence simplifying assembly and replacement of distributor 1 as compared with known distributors; and distributor 1 itself is cheap to produce, mainly on account of the transmission system comprising a relatively small number of components, and the components themselves being easy to produce and/or readily available on the market, as opposed to specially designed or dedicated components.

Clearly, changes may be made to distributor 1 as described and illustrated herein without, however, departing from the scope of the present invention.

In particular, provision may be made for a guide-slide assembly other than that described herein by way of example; and changes may be made to the position of linear motor 44 in relation to guide-slide assembly 33, and to the manner in which motor 44 is connected to assembly 33.

Moreover, movable member 45 of motor 44 may be connected directly to rack 18 and, in general, to the input member of one of said known motion converting devices, which may be used in place of device 16, so as to further reduce inertia, size and weight. Also, movable member 45 of motor 44 may even comprise an end portion itself defining rack 18.

## Claims

1. A glass gob distributor (1) comprising a frame (2) stably fittable to a fixed body; at least one gob distributing body (8) connected to the frame (2) in rotary manner about a vertical axis (11); and actuating means (14) for rotating the distributing body (8) about said vertical axis (11) and positioning the distributing body (8) in a number of angular gob feed positions; said actuating means (14) comprising an electric motor (44), a translating member (18) movable along a straight path (B) and converting the linear motion of the translating member (18) in a rotary motion of the distributing body (8) a single linear-rotary motion converting device (16) control means (48) being provided for controlling said electric motor (44); characterized in that said electric motor is a linear electric motor (44) having a linearly-translating movable member (45) connected to said translating member (18).

2. A distributor as claimed in Claim 1, characterized in that the movable member (45) of said linear motor (44) is movable in a direction parallel to said straight path (B).

3. A distributor as claimed in Claim 2, characterized in that the movable member (45) of the linear motor (44) and the translating member (18) of said converting device (16) are aligned with each other along said straight path (B).

4. A distributor as claimed in one of the foregoing Claims, characterized in that said connecting means (16)(33) also comprise a guide-slide assembly (33); the guide-slide assembly (33) comprising a guide (29), and a slide (34) connected in axially-sliding manner to said guide (29); the movable member (45) of said linear motor (44) and the translating member (18) of said motion converting device (16) being connected integrally to said slide (34).

5. A distributor as claimed in Claim 4, characterized in that said actuating means (14) also comprise an airtight chamber (23); at least said linear motor (44) being housed inside said airtight chamber (23).

6. A distributor as claimed in Claim 5, characterized in that said actuating means (14) comprise a hollow body (21) at least partially defining said airtight chamber (23); the guide (29) of said guide-slide assembly (33) being fitted to said hollow body (21).

7. A distributor as claimed in Claim 6, characterized in that said slide (34) extends partially inside, and projects outwards of, said hollow body (21).

8. A distributor as claimed in Claim 7, characterized in that said guide (29) comprises a pair of straight, transversely-spaced guides (30) (31) ; and said slide (34) comprises a respective rod (35) for each guide (30)(31) in said pair of guides.

9. A distributor as claimed in Claim 8, characterized in that said linear electric motor (44) is located substantially between the guides (30)(31) in said pair of straight guides.

10. A distributor as claimed in Claim 9, characterized in that said hollow body (21) is connected integrally to said frame (2) to define said airtight chamber (23); said linear motor (44) comprising a fixed member (46) connected integrally to said hollow body (21).

## Patentansprüche

1. Ein Glaskülbelverteiler (1) aufweisend einen Rahmen (2), der stabil an einem festen Körper befestigbar ist; und zumindest einen Külbelverteilungskörper (8), der mit dem Rahmen (2) in einer drehbaren Weise um eine vertikale Achse (11) verbunden ist; und Betätigungsmittel (14) zum Drehen des Verteilungskörpers (8) um die vertikale Achse (11) und zum Positionieren des Verteilungskörpers in eine Anzahl von im Winkel verteilten Külbelzuführpositionen; wobei die Betätigungsmittel (14) einen Elektromotor (44), ein Verschiebemittel (18), das entlang eines geraden Wegs (B) bewegbar ist und eine einzelne Umwandlungsvorrichtung für eine Linearbewegung in eine Drehbewegung umfassen, die die lineare Bewegung des Verschiebeglieds (18) in eine Drehbewegung des Verteilungskörpers (8) umwandelt und Steuermittel (48), die bereitgestellt sind zum Steuern des Elektromotors (44); dadurch gekennzeichnet, dass der Elektromotor ein linearer Elektromotor (44) ist, mit einem sich linear-verschiebenden bewegbaren Glied (45), das mit dem Verschiebeglied (18) verbunden ist.

2. Ein Verteiler nach Anspruch 1, dadurch gekennzeichnet, dass das bewegbare Glied (45) des Linearmotors (44) in einer Richtung parallel zu dem geraden Weg (B) bewegbar ist.

3. Ein Verteiler nach Anspruch 2, dadurch gekennzeichnet, dass das bewegbare Glied (45) des Elektromotors (44) und das Verschiebeglied (18) der Umwandlungsvorrichtung (16) zueinander ausgerichtet sind, entlang des geraden Wegs (B).

4. Ein Verteiler nach einem der vorangegangenen Ansprüche, dadurch gekennzeichnet, dass das Verbindungsmittel (16) (33) ferner eine Führungs-Gleiteinheit (33) umfasst; wobei die Führungs-Gleiteinheit (33) eine Führung (29) umfasst, ein Gleitstück (34), das in einer axial-gleitenden Weise mit der Führung (29) verbunden ist; wobei das verschiebbare Glied (45) des Linearmotors (44) und das Verschiebeglied (18) der Vorrichtung (16) zur Umwandlung der Bewegung integral mit dem Gleitstück (34) verbunden ist.

5. Ein Verteiler nach Anspruch 4, dadurch gekennzeichnet, dass das Betätigungsmittel (14) ferner eine luftdichte Kammer (23) umfasst; wobei zumindest der Linearmotor (44) innerhalb dieser luftdichten Kammer (23) angeordnet ist.

6. Ein Verteiler nach Anspruch 5, dadurch gekennzeichnet, dass das Betätigungsmittel (14) einen hohlen Körper (21) umfasst, der zumindest teilweise die luftdichte Kammer (23) definiert; wobei die Führung (29) der Führungs-Gleiteinheit (33) an dem hohlen Körper (21) befestigt ist.

7. Ein Verteiler nach Anspruch 6, dadurch gekennzeichnet, dass das Gleitstück (34) sich teilweise innerhalb des hohlen Körpers (21) erstreckt und daraus hervorragt.

8. Ein Verteiler nach Anspruch 7, dadurch gekennzeichnet, dass die Führung (29) ein Paar von geraden, transversal voneinander beabstandeten Führungen (30) (31) umfasst; und dass das Gleitstück (34) eine entsprechende Stange (35) für jede Führung (30) (31) in dem Paar von Führungen umfasst.

9. Ein Verteiler nach Anspruch 8, dadurch gekennzeichnet, dass der Linearmotor (44) im wesentlichen zwischen den Führungen (30) (31) in dem Paar von geraden Führungen angeordnet ist.

10. Ein Verteiler nach Anspruch 9, dadurch gekennzeichnet, dass der hohle Körper (21) integral mit dem Rahmen (2) verbunden ist, um die luftdichte Kammer (23) zu definieren; wobei der Linearmotor (44) ein festes Glied (46) umfasst, das integral mit dem hohlen Körper (21) verbunden ist.

## Revendications

1. Distribution de paraisons de verre (1) comprenant un bâti (2) pouvant être monté de manière stable sur un corps fixe, au moins un corps de distribution de paraisons (8) joint au bâti (2) de manière tournante autour d'un axe vertical (11), et des moyens d'actionnement (14) destinés à faire tourner le corps de distribution (8) autour de l'axe vertical (11) et le mettre dans un certain nombre de positions angulaires d'apport de paraisons, ces moyens d'actionnement (14) comprenant un moteur électrique (44), un élément à translation (18) mobile le long d'un chemin rectiligne (B) et un dispositif unique de transformation de mouvement rectiligne en mouvement de rotation (16) qui transforme le mouvement rectiligne de l'élément à translation (18) en un mouvement de rotation du corps distributeur (8), un moyen de commande (18) étant prévu pour la commande du moteur électrique (44), caractérisé par le fait que le moteur électrique est un moteur électrique linéaire (44) ayant un élément mobile en translation rectiligne (45) joint à l'élément à translation (18).

2. Distributeur selon la revendication 1, caractérisé par le fait que l'élément mobile (45) du moteur linéaire (44) est mobile dans une direction parallèle au chemin rectiligne (B).

3. Distributeur selon la revendication 2, caractérisé par le fait que l'élément mobile (45) du moteur linéaire (44) et l'élément à translation (18) du dispositif de transformation de mouvement (16) sont alignés le long du chemin rectiligne (B).

4. Distributeur selon l'une des revendications précédentes, caractérisé par le fait que les moyens de liaison (16)(33) comprennent aussi un ensemble guidage-coulisseau (33), lequel comprend un guidage (29) et un coulisseau (34) lié en coulissement axial à ce guidage (29), l'élément mobile (45) du moteur linéaire (44) et l'élément à translation (18) du dispositif de transformation de mouvement (16) faisant corps avec le coulisseau (34).

5. Distributeur selon la revendication 4, caractérisé par le fait que les moyens d'actionnement (14) comprennent aussi une chambre étanche à l'air (23), au moins le moteur linéaire (44) étant logé dans cette chambre (23).

6. Distributeur selon la revendication 5, caractérisé par le fait que les moyens d'actionnement (14) comprennent un corps creux (21) délimitant au moins partiellement la chambre étanche à l'air (23), le guidage (29) de l'ensemble guidage-coulisseau (33) étant monté sur ce corps creux (21).

7. Distributeur selon la revendication 6, caractérisé par le fait que le coulisseau (34) s'étend en partie à l'intérieur du corps creux (21) et fait saillie à l'extérieur de celui-ci.

8. Distributeur selon la revendication 7, caractérisé par le fait que le guidage (29) comprend une paire de guidages rectilignes espacés transversalement (30)(31), et le coulisseau (34) comprend une tige respective (35) pour chaque guidage (30)(31) de la paire de guidages.

9. Distributeur selon la revendication 8, caractérisé par le fait que le moteur électrique linéaire (44) est placé sensiblement entre les guidages (30)(31) de la paire de guidages rectilignes.

10. Distributeur selon la revendication 9, caractérisé par le fait que le corps creux (21) est joint au bâti (2) de façon à faire corps avec celui-ci pour délimiter la chambre étanche à l'air (23), le moteur linéaire (44) comprenant un élément fixe (46) joint au corps creux (21) de façon à faire corps avec celui-ci.
